# EUROPEAN PATENT APPLICATION

(11) **EP 1 818 176 A2**
(43) Date of publication of application: **15.08.2007**
(21) Application number: 07001426.1
(22) Date of filing: 23.01.2007
(51) Int. Cl.: B41F 33/00

(54) **Dampening water quantity measuring apparatus and dampening water adjusting method**

(30) Priority: 13.02.2006 JP 2006034633
(71) Applicant: National University Corporation Kyoto Institute of Technology, Sakyo-ku Kyoto-shi, Kyoto 606-8585 (JP); Aishintechno Co., Ltd., Kuze-gun Kyoto 613-0022 (JP)
(72) Inventor: Murata, Shigeru c/o National Univ. Corp. Kyoto, Sakyo-ku Kyoto-shi Kyoto 606-8585 (JP); Mizuta, Masaji, Kuze-gun, Kyoto, 613-0022 (JP)
(74) Representative: Kilian, Helmut

(57) **Abstract**

In a dampening water measuring apparatus, light emitted from a semiconductor laser has its beam expanded by an objective lens, and is then reflected by a beam splitter to irradiate a non-image area on a surface of a printing plate P. The laser beam reflected from the non-image area on the surface of the printing plate passes through the beam splitter, and enters a CCD camera. The CCD camera measures speckle intensity of the incident laser diffused light, and transmits measurements to a controller through an interface.

## Description

### BACKGROUND OF THE INVENTION

### 1. Field of the Invention

This invention relates to a dampening water quantity measuring apparatus, and a dampening water adjusting method.

### 2. Description of the Related Art

In offset printing, control of a rate of feeding dampening water to a printing plate is important, as is control of an ink feed rate, in performing proper printing. Conventionally, the feed rate of dampening water is controlled by a skillful engineer who visually checks a state of the surface of the printing plate and prints produced, and changes the feed rate of dampening water.

Further, it has been proposed to measure a film thickness of dampening water on the plate surface or on a water feed roller with a laser focus displacement meter, for example. In this case, however, it is difficult to measure a precise film thickness since the plate surface or the surface of the water feed roller is subject to out-of-plane displacement.

On the other hand, offset presses have been proposed which measure the quantity of dampening water on a printing plate surface using an infrared sensor, as described in Japanese Unexamined Patent Publications H05-208481 (1993), No. 200-318130, and No. 2005-262760.

In the inventions described in the above publications, the quantity of water is measured by an infrared sensor using an infrared absorption band easily absorbable by water molecules. However, a trace quantity of ink particles is intermingled in the dampening water on the plate surface or in the dampening water on the dampening water roller. Such ink particles absorb infrared radiation, which produces an error in the result of measurement of the water quantity. This gives rise to a problem that the quantity of dampening water cannot be measured accurately.

### SUMMARY OF THE INVENTION

The object of this invention, therefore, is to provide a dampening water quantity measuring apparatus and a dampening water adjusting method for measuring and adjusting the quantity of dampening water accurately with a simple composition.

The above object is fulfilled, according to this invention, by a dampening water adjusting method comprising a measuring step for emitting a laser beam from a laser source to a non-image area on a surface of a printing plate before supplying dampening water to the printing plate, and measuring speckle intensity of laser diffused light reflected from the surface of the printing plate; a dampening water supplying step for emitting a laser beam from the laser source to the non-image area on the surface of the printing plate while supplying dampening water from a dampening water feeder to the printing plate, and measuring speckle intensity of laser diffused light reflected from the surface of the printing plate; and an adjusting step for adjusting a feed rate of dampening water from the dampening water feeder so that the speckle intensity of the laser diffused light measured in the dampening water supplying step exceed the speckle intensity of the laser diffused light measured in the measuring step.

With this dampening water adjusting method, the quantity of dampening water can be adjusted accurately even with a simple construction.

In another aspect of the invention, a dampening water adjusting method comprises a measuring step for varying a feed rate of dampening water in a range including a proper feed rate between an excessive feed rate and an insufficient feed rate while emitting a laser beam from a laser source to a non-image area on a surface of a printing plate, and measuring a relationship between quantity of dampening water and speckle intensity of laser diffused light reflected from the surface of the printing plate; a dampening water supplying step for measuring speckle intensity of laser diffused light reflected from the surface of the printing plate in a state of emitting a laser beam from the laser source to the non-image area on the surface of the printing plate while supplying dampening water from a dampening water feeder to the printing plate; and an adjusting step for adjusting the feed rate of dampening water from the dampening water feeder, based on the relationship between quantity of dampening water and speckle intensity of laser diffused light measured in the measuring step, and the speckle intensity of the laser diffused light measured in the dampening water supplying step.

In a further aspect of the invention, a dampening water quantity measuring apparatus is provided for measuring a feed rate of dampening water supplied to a printing plate. The apparatus comprises a laser source for emitting a laser beam to a non-image area on a surface of the printing plate; an imaging device for measuring speckle intensity of laser diffused light reflected from the surface of the printing plate; and a controller for measuring a quantity of dampening water based on the speckle intensity of the laser diffused light measured by the imaging device.

Other features and advantages of the invention will be apparent from the following detailed description of the embodiments of the invention.

### BRIEF DESCRIPTION OF THE DRAWINGS

For the purpose of illustrating the invention, there are shown in the drawings several forms which are presently preferred, it being understood, however, that the invention is not limited to the precise arrangement and instrumentalities shown.
Fig. 1 is a schematic view showing a principal portion of a printing machine according to this invention;
Fig. 2 is a schematic view of a dampening water measuring apparatus according to this invention; and
Fig. 3 is a graph showing a relationship between quantity of dampening water and speckle intensity of laser diffused light reflected from a surface of a printing plate.

### DESCRIPTION OF THE PREFERRED EMBODIMENTS

An embodiment of this invention will be described hereinafter with reference to the drawings.

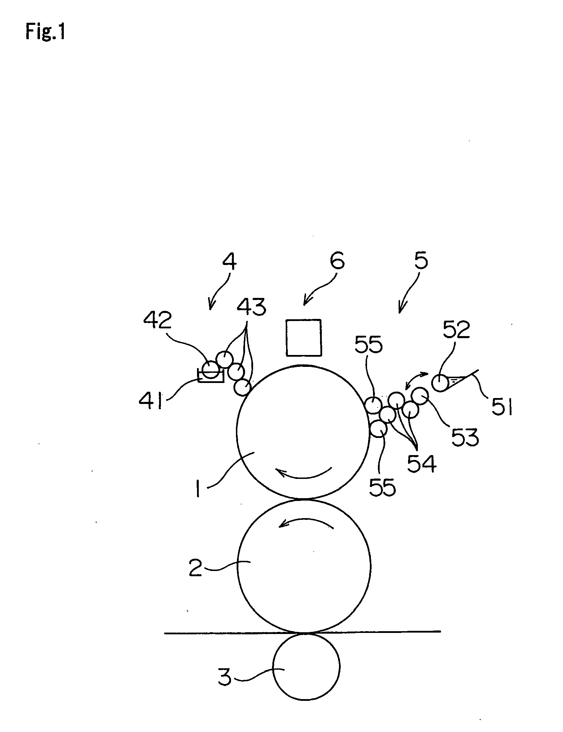

The construction of a printing machine according to this invention will be described first. Fig. 1 is a schematic view showing a principal portion of the printing machine.

The printing machine includes a plate cylinder 1 having a printing plate mounted peripherally thereof, a blanket cylinder 2 having the same diameter as the plate cylinder 1, and an impression cylinder 3 having half the diameter of the blanket cylinder 2. A dampening water feeder 4, an ink feeder 5, and a dampening water measuring device 6 according to this invention, are arranged around the plate cylinder 1. In this printing machine, an image is transferred to printing paper as the latter passes between the blanket cylinder 2 and impression cylinder 3.

The dampening water feeder 4 includes a water vessel 41 for storing dampening water, a water fountain roller 42 partly immersed in the dampening water stored in the water vessel 41, and three water feed rollers 43. A feed rate of dampening water is adjustable by changing rotating speed of the water fountain roller 42 rotated by a motor not shown.

The ink feeder 5 includes an ink fountain roller 52 defining an ink well with ink keys 51, an ink transfer roller 53, three ink kneading rollers 54, and two ink applicator rollers 55. A feed rate of ink is adjustable by changing pressing forces of ink keys 51 applied to the ink fountain roller 52.

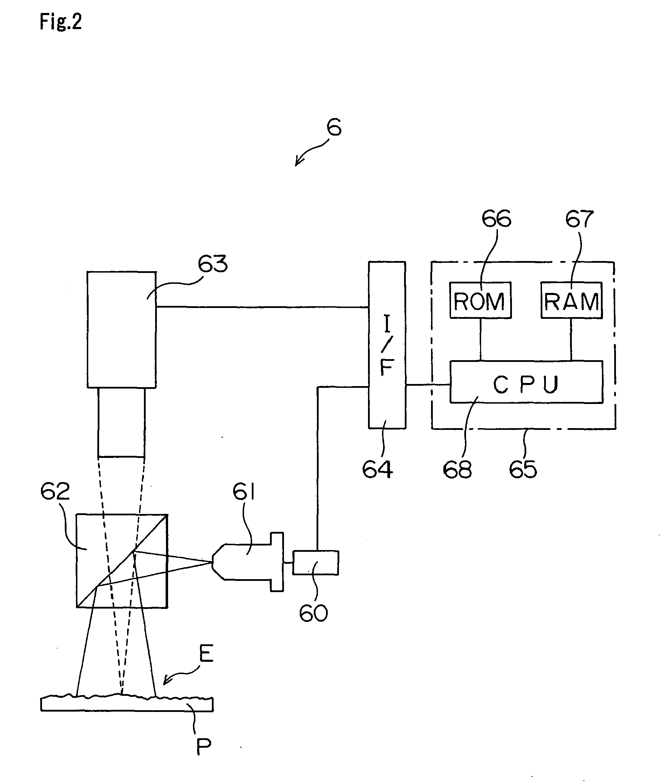

The construction of the dampening water measuring device 6 according to this invention will be described next. Fig. 2 is a schematic view of the dampening water measuring device 6 according to this invention.

This invention is based on the findings made by Inventors that the speckle intensity of laser diffused light reflected from a non-image area E on the surface of printing plate P is at its maximum when the dampening water is supplied in a proper quantity to the printing plate.

The dampening water measuring device 6 includes a semiconductor laser 60 for emitting a laser beam, an objective lens 61, a beam splitter 62 for reflecting the laser beam emitted from the semiconductor laser 60 and expanded by the objective lens 61 to irradiate the non-image area E on the surface of printing plate P, a CCD camera 63 for receiving the laser beam reflected from the surface of printing plate P and transmitted through the beam splitter 62 for measuring speckles of laser diffused light, and a controller 65 connected to the semiconductor laser 60 and CCD camera 63 through an interface 64. The controller 65 has a ROM 66 storing an operating program necessary for control of the apparatus, a RAM 67 for temporarily storing data and the like in time of control operation, and a CPU 68 for performing logical operations.

In this dampening water measuring device 6, the light emitted from the semiconductor laser 60 has its flux expanded by the objective lens 61, and is reflected by the beam splitter 62 to irradiate the non-image area E on the surface of printing plate P. The laser beam reflected from the non-image area E of the surface of printing plate P passes through the beam splitter 62 and enters the CCD camera 63. The CCD camera 63 measures the speckle intensity of the incident laser beam, and transmits measurements to the controller 65 through the interface 64.

The speckles herein refer to spots of varied light intensity levels observed in diffused light when a surface of an object is irradiated with highly coherent light such as a laser beam. Such speckles occur as a result of the laser beam scattering on the surface of the object and cohering in irregular phase relations.

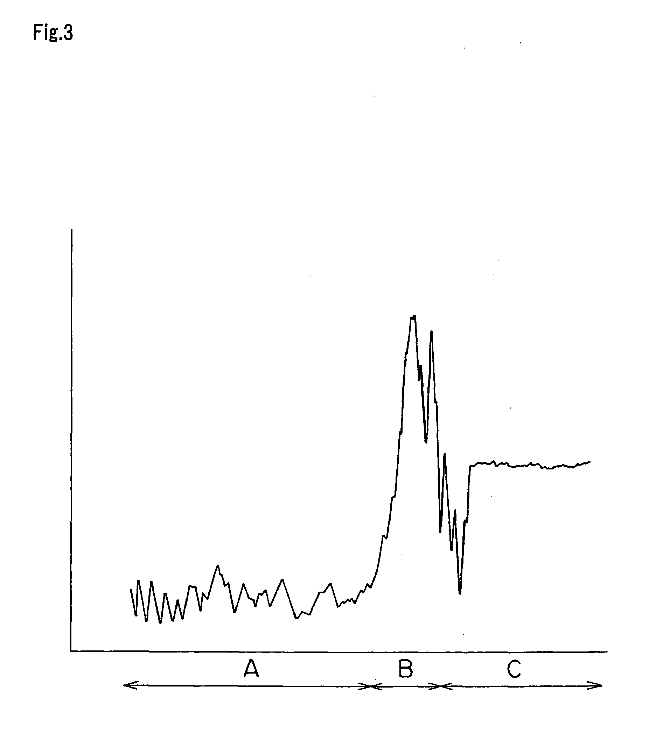

Fig. 3 is a graph showing a relationship between quantity of dampening water and speckle intensity of laser diffused light reflected from a surface of a printing plate. Specifically, this graph shows a relationship between quantity of dampening water and speckle intensity of laser diffused light, which was obtained by measuring the speckle intensity of laser diffused light, with progress of time, from a state where the dampening water is supplied in an excessive quantity to the printing plate, through a state of the dampening water having dried to become a proper quantity, to a state of the dampening water having become short. In this figure, the vertical axis represents speckle intensity and the horizontal axis time. The speckle intensity is expressed by the integral of measured speckles.

As seen, in the state of region A where the dampening water is first supplied in an excessive quantity, the laser diffused light has low speckle intensity. In the state of region B where the dampening water has gradually dried to become a proper quantity best suited for printing, the laser diffused light attains maximum speckle intensity. As time passes and the dampening water dries further, in the state of region C where the dampening water becomes short, the speckle intensity of the laser diffused light takes values between those in region A where the dampening water is supplied excessively and region B where the quantity of dampening water is proper and optimal for printing.

Whether the feed rate of dampening water is excessive, proper or insufficient is visually determined by an engineer skilled in offset printing, for example.

As shown in this graph, when the dampening water is supplied in a proper quantity, the speckle intensity of the laser diffused light reflected from the non-image area E on the surface of printing plate P attains a maximum. When the dampening water is supplied excessively, the speckle intensity is reduced to a minimum. When the dampening water runs short, the speckle intensity takes an intermediate value (a value between the maximum and minimum). What is necessary, therefore, is to control the feed rate of dampening water so that the speckle intensity of the laser diffused light reflected from the non-image area E on the surface of printing plate P may attain a maximum, exceeding the speckle intensity of the time when the dampening water runs short.

When the feed rate of dampening water is controlled using the dampening water measuring device 6 noted hereinbefore, a laser beam is first emitted from the semiconductor laser 60 to the non image area E on the surface of printing plate P before supplying the dampening water to the printing plate P. The CCD camera 63 measures the speckle intensity of laser diffused light reflected from the surface of printing plate P. The speckle intensity of the laser diffused light measured at this time is stored in the RAM 67 of controller 65.

Then, a printing operation is started. In time of this printing operation, the dampening water feeder 4 supplies dampening water to the printing plate P, and the ink feeder 5 supplies ink to the printing plate P. In this state, a laser beam is emitted from the semiconductor laser 60 to the non-image area E on the surface of printing plate P, and the CCD camera 63 measures the speckle intensity of laser diffused light reflected from the surface of printing plate P.

Subsequently, the controller 65 compares the speckle intensity of the laser diffused light measured after starting the printing operation (hereinafter called "speckle intensity in time of printing") and the speckle intensity of the laser diffused light measured before supplying the dampening water (hereinafter called "speckle intensity at dry time").

As described above, when the dampening water is supplied properly, the speckle intensity in time of printing attains a maximum. What is necessary, therefore, is to control the feed rate of dampening water from the dampening water feeder so that the speckle intensity in time of printing may attain a maximum, exceeding the speckle intensity at dry time.

In this embodiment, therefore, when the speckle intensity in time of printing exceeds the speckle intensity at dry time, the feed rate of dampening water is determined proper. When the speckle intensity in time of printing is approximately equal to the speckle intensity at dry time, the feed rate of dampening water is determined insufficient and the feed rate is increased. On the other hand, when the speckle intensity in time of printing is lower than the speckle intensity at dry time, the feed rate of dampening water is determined excessive, and the feed rate is decreased.

With the above construction, it is possible to measure the quantity of dampening water easily and adjust the quantity of dampening water accurately by measuring the speckle intensity of the laser diffused light reflected from the surface of the printing plate.

In the above embodiment, propriety of the feed rate of dampening water is determined based on whether the speckle intensity in time of printing is higher than the speckle intensity at dry time. Alternatively, feed rates of dampening water may be determined from levels of the speckle intensity in time of printing.

Specifically, data as shown in the graph of Fig. 3 described hereinbefore is prepared beforehand by varying the feed rate of dampening water in a range including a proper feed rate between an excessive feed rate and an insufficient feed rate. The speckle intensity of laser diffused light is divided and set to three regions consisting of a high, first region, a low, third region, and an intermediate, second region between the first and third regions. When the speckle intensity in time of printing is in the first region, the feed rate of dampening water is determined proper. When the speckle intensity in time of printing is in the second region, the feed rate of dampening water is determined insufficient and the feed rate is increased. On the other hand, when the speckle intensity in time of printing is in the third region, the feed rate of dampening water is determined excessive and the feed rate is decreased.

With this construction also, it is possible to measure the quantity of dampening water easily and adjust the quantity of dampening water accurately by measuring the speckle intensity of the laser diffused light reflected from the surface of the printing plate.

## Claims

1. A dampening water adjusting method comprising:
a measuring step for emitting a laser beam from a laser source to a non-image area on a surface of a printing plate before supplying dampening water to the printing plate, and measuring speckle intensity of laser diffused light reflected from the surface of the printing plate;
a dampening water supplying step for emitting a laser beam from the laser source to the non-image area on the surface of the printing plate while supplying dampening water from a dampening water feeder to the printing plate, and measuring speckle intensity of laser diffused light reflected from the surface of the printing plate; and
an adjusting step for adjusting a feed rate of dampening water from said dampening water feeder so that the speckle intensity of the laser diffused light measured in said dampening water supplying step exceed the speckle intensity of the laser diffused light measured in said measuring step.

2. A dampening water adjusting method as defined in claim 1, wherein:
when the speckle intensity of the laser diffused light measured in said dampening water supplying step is approximately equal to the speckle intensity of the laser diffused light measured in said measuring step, the feed rate of dampening water is determined insufficient, and said adjusting step is executed to increase the feed rate of dampening water; and
when the speckle intensity of the laser diffused light measured in said dampening water supplying step is less than the speckle intensity of the laser diffused light measured in said measuring step, the feed rate of dampening water is determined excessive, and said adjusting step is executed to decrease the feed rate of dampening water

3. A dampening water adjusting method comprising:
a measuring step for varying a feed rate of dampening water in a range including a proper feed rate between an excessive feed rate and an insufficient feed rate while emitting a laser beam from a laser source to a non-image area on a surface of a printing plate, and measuring a relationship between quantity of dampening water and speckle intensity of laser diffused light reflected from the surface of the printing plate;
a dampening water supplying step for measuring speckle intensity of laser diffused light reflected from the surface of the printing plate in a state of emitting a laser beam from the laser source to the non-image area on the surface of the printing plate while supplying dampening water from a dampening water feeder to the printing plate; and
an adjusting step for adjusting the feed rate of dampening water from said dampening water feeder, based on the relationship between quantity of dampening water and speckle intensity of laser diffused light measured in said measuring step, and the speckle intensity of the laser diffused light measured in said dampening water supplying step.

4. A dampening water adjusting method as defined in claim 3, wherein:
the speckle intensity of the laser diffused light measured in said measuring step is divided into three regions consisting of a high, first region, a low, third region, and an intermediate, second region between the first and the third regions;
when the speckle intensity of the laser diffused light measured in said dampening water supplying step is in said first region, the feed rate of dampening water is determined proper;
when the speckle intensity of the laser diffused light measured in said dampening water supplying step is in said second region, the feed rate of dampening water is determined insufficient, and said adjusting step is executed to increase the feed rate of dampening water; and
when the speckle intensity of the laser diffused light measured in said dampening water supplying step is in said third region, the feed rate of dampening water is determined excessive, and said adjusting step is executed to decrease the feed rate of dampening water.

5. A dampening water quantity measuring apparatus for measuring a feed rate of dampening water supplied to a printing plate, comprising:
a laser source for emitting a laser beam to a non-image area on a surface of the printing plate;
an imaging device for measuring speckle intensity of laser diffused light reflected from the surface of the printing plate; and
a controller for measuring a quantity of dampening water based on the speckle intensity of the laser diffused light measured by said imaging device.

6. A dampening water quantity measuring apparatus as defined in claim 5, wherein said controller is arranged to determine that the quantity of dampening water is optimal when the speckle intensity substantially attains a maximum.
